# EUROPÄISCHE PATENTSCHRIFT

(11) **EP 1 488 942 B1**
(45) Veröffentlichungstag und Bekanntmachung des Hinweises auf die Patenterteilung: **19.04.2006**
(21) Anmeldenummer: 04022668.0
(22) Anmeldetag: 03.12.2003
(51) Int. Cl.: B60D 1/28

(54) **Kupplungsvorrichtung**
Trailer hitch
Attache remorque

(30) Priorität: 05.12.2002 AT 18242002
(43) Veröffentlichungstag der Anmeldung: 22.12.2004
(62) Teilanmeldung aus: 03450270.8
(73) Patentinhaber: Scharmüller, Josef, A-4870 Vöcklamarkt (AT)
(72) Erfinder: Scharmüller, Josef, A-4870 Vöcklamarkt (AT)
(74) Vertreter: Gibler, Ferdinand

(56) Entgegenhaltungen:
- US-A- 3 522 958
- US-A- 3 730 558
- US-A- 4 208 065
- US-A- 5 433 467

## Beschreibung

Die Erfindung betrifft eine Kupplungsvorrichtung mit einer Kupplungskugel zur Aufnahme einer eine Kugelpfanne aufweisenden Zugöse und einem Niederhalter, wobei eine mit dem Niederhalter lösbar verbundene Niederhalterschraube zum Eingriff mit der Zugöse vorgesehen ist und die Niederhalterschraube eine Innensechskant-Bohrung od. dgl. aufweist.

Bei bekannten derartigen Kupplungsvorrichtungen wird beim Einkuppeln die Zugöse auf die Kugelpfanne aufgesetzt und anschließend der Niederhalter von einer zweiten Position in eine erste Position verschwenkt und mittels einer Stecksicherung fixiert. Nachteilig dabei ist, daß die Stecksicherung nur bei einer vorgebbaren Position des Niederhalters einbringbar ist und insbesondere durch Verschleiß, z.B. ein vergrößertes Lagerspiel od. dgl., und/oder Verschmutzung das Fixieren des Niederhalters erschwert wird.

Die US 4 208 065 A betrifft eine Kupplungsvorrichtung mit einer Kupplungskugel zur Aufnahme einer Zugöse und einem Niederhalter, wobei der Niederhalter eine Niederhalterschraube umfasst.

Aus der US 3 522 958 A ist ein Niederhalter bekannt, der mittels einer Schraube an der Kupplungsvorrichtung befestigt wird.

Die US 3 730 558 A offenbart ebenfalls einen Niederhalter, der mittels einer Schraube an der Kupplungsvorrichtung befestigt wird.

Die US 5 433 467 A offenbart eine Kupplung, die eine Kupplungsvorrichtung mit einer Kupplungskugel, eine Zugöse und eine Klammer zum Halten der Zugöse auf der Kupplungskugel umfasst.

Aufgabe der vorliegenden Erfindung ist es, eine Kupplungsvorrichtung der eingangs genannten Art weiterzubilden, bei der die Nachteile der bekannten Lösungen vermieden werden, mit der der Vorgang des Kuppelns und/oder des Abkuppeln einfach und schnell durchgeführt werden kann und bei dem eine sichere und belastbare Verbindung erreicht wird.

Erfindungsgemäß wird dies dadurch erreicht, daß die Niederhalterschraube wenigstens eine Schmieröffnung aufweist.

Durch die Niederhalterschraube kann der aufgrund der Reibung mit der Zugöse entstehende Verschleiß durch Ersatz oder Verstellen der Niederhalterschraube ausgeglichen werden, wobei die Instandhaltungskosten gering gehalten werden können. Weiters können für den Niederhalter und die Niederhalterschraube unterschiedliche Materialien vorgesehen sein, wodurch die Belastbarkeit und Haltbarkeit des Niederhalters verbessert werden können.

Durch diese Ausführung kann eine besonders geringe Bauhöhe der Niederhalterschraube erreicht werden.

In Weiterführung der Erfindung kann vorgesehen sein, daß die Niederhalterschraube wenigstens eine Schmieröffnung aufweist. Durch die Schmieröffnung kann die Lebensdauer der Niederhalterschraube erhöht werden und die Reibung zwischen der Niederhalterschraube und der Zugöse verringert werden.

In weiterer Ausgestaltung der Erfindung kann vorgesehen sein, daß der Niederhalter um eine Schwenkachse von einer ersten Position in eine zweite Position verschwenkbar ist und mittels wenigstens eines Fixierelementes in der ersten Position fixierbar ist.

Gemäß einer anderen Ausführungsform der Erfindung kann vorgesehen sein, daß ein Stellelement vorgesehen ist, wobei vom Stellelement auf den Niederhalter in der ersten Position eine erste Haltekraft und in der zweiten Position eine zweite Haltekraft wirkt, und daß ein Auslöseelement zum Verbringen des Niederhalters von der zweiten Position in die erste Position vorgesehen ist. Dadurch ergibt sich der Vorteil, daß der Niederhalter in der ersten Position und in der zweiten Position jeweils durch das Stellelement gehalten wird und durch Betätigung des Auslöseelementes das Verbringen des Niederhalters von der zweiten Position in die erste Position automatisierbar ist, wobei das Auslöseelement insbesondere von der Zugöse und/oder mittels einer Fernbedienung od. dgl. betätigbar ausgebildet sein kann. Weiters kann eine Fembedienbarkeit des Fixierelementes vorgesehen sein, wodurch insbesondere der Kupplungsvorgang besonders einfach ausgestaltet werden kann. Das Stellelement kann aufgrund der Masseverteilung des Niederhalters, als Federelement, als Kolbenelement od. dgl. ausgebildet sein.

In weiterer Ausgestaltung der Erfindung kann vorgesehen sein, daß das wenigstens eine Fixierelement als verschwenkbare Klappe od. dgl. ausgebildet ist. Mittels einer Klappe od. dgl. kann der Niederhalter in der ersten Position mittels einer Schwenkbewegung fixiert und/oder freigegeben werden, wobei eine Schwenkbewegung einfach durchführbar und insbesondere automatisierbar ist.

Gemäß einer weiteren Ausgestaltung der Erfindung kann vorgesehen sein, daß der Niederhalter in der ersten Position bei Belastung die Klappe in Richtung eines Anschlags belastet. Durch diese Ausbildung kann sichergestellt werden, daß die Klappe auch ohne einer Federbelastung, insbesondere bei einem Versagen der Federbelastung, aufgrund Selbsthemmung in der den Niederhalter fixierenden Stellung verbleibt.

Gemäß einer anderen Ausführungsform der Erfindung kann vorgesehen sein, daß eine Fangvorrichtung für die Zugöse vorgesehen ist. Durch die Fangvorrichtung kann der Kupplungsvorgang, insbesondere bei einem zumindest teilweise automatisierten Kupplungsvorgang, besonders einfach und zuverlässig ausgestaltet werden.

In weiterer Ausgestaltung der Erfindung kann vorgesehen sein, daß eine Grundplatte eine mit einem Innengewinde ausgebildete Aufnahmeöffnung, insbesondere für die Kupplungskugel, aufweist. Durch das Ausbilden des Innengewindes kann die Kupplungskugel kraftschlüssig mit der Grundplatte verbunden werden, wobei anstelle der Kupplungskugel auch ein Kupplungszapfen od. dgl. mit der Grundplatte verbindbar ist.

Die Erfindung betrifft weiters eine Niederhalterschraube für einen Niederhalter einer oben genannten Kupplungsvorrichtung mit einer Kontaktfläche für eine Zugöse und einem Gewindeabschnitt.

Erfindungsgemäß weist die Niederhalterschraube wenigstens eine Schmieröffnung auf.

Weiters kann vorgesehen sein, daß das Stellelement als Druckelement, insbesondere als Federelement, druckbeaufschlagbares Kolbenelement od. dgl., ausgebildet ist, wodurch die Gefahr eines Versagens des Stellelementes aufgrund Materialermüdung und/oder Verschleiß gering gehalten werden. Bei einem Federelement kann auf einfache Weise eine Vorspannung aufgebracht werden, wodurch die erste Haltekraft und/oder die zweite Haltekraft vorgegeben werden können. Bei einem druckbeaufschlagten Kolbenelement können die Haltekräfte mittels des Druckes des mit dem Kolbenelement wirkenden Druckmediums vorgegeben und/oder verändert werden. Es kann weiters vorgesehen sein, daß das wenigstens eine Fixierelement mit einer Fernbedienungseinheit verbunden ist. Dadurch kann der Vorgang des Kuppelns und/oder des Abkuppelns besonders einfach ausgestaltet werden. Bei einer Ausführungsform, bei der die Klappe federbelastet ist und ein Anschlag vorgesehen ist, kann sichergestellt werden, daß die Klappe selbsttätig gegen den Anschlag bewegt wird, wodurch insbesondere der Kupplungsvorgang zumindest teilweise automatisiert werden kann. Insbesondere bei einem als Bolzen ausgebildeten Fixierelement kann ein besonders einfaches und kostengünstig herstellbares Fixierelement bereitgestellt werden. Sofern das Auslöseelement einen Vorsprung umfasst, kann durch Verschieben des Vorsprunges, insbesondere mittels der Zugöse, der Niederhalter von der zweiten Position in die erste Position verbracht werden, wodurch eine zumindest teilweise Automatisierung des Kuppelns erreicht werden kann. Es kann vorgesehen sein, daß eine Grundplatte mit Befestigungsöffnungen für die Aufnahme von Schrauben od. dgl. vorgesehen ist. Diese Ausbildung ermöglicht eine einfache Befestigung der erfindungsgemäßen Kupplungsvorrichtung an einem Fahrzeug, Anhänger od. dgl., wobei insbesondere auch eine nachträgliche Befestigung der Kupplungsvorrichtung erfolgen kann. Weiters kann der Fortsatz eine Innensechskant-Bohrung od. dgl. und/oder an einem der Kupplungskugel anliegenden Ende eine Schraubfläche aufweisen, wodurch bei dieser Ausführungen die Bauhöhe des Fortsatzes besonders gering gehalten werden kann. Weist die Kupplungskugel wenigstens eine Schmieröffnung aufweist, so kann die Reibung zwischen der Kupplungskugel und der Zugöse gering gehalten werden, wodurch der Verschleiß der Kupplungskugel und/oder der Zugöse vermindert und deren Lebensdauer erhöht werden. Weiters können die Instandhaltungskosten gering gehalten werden. Die Kupplungskugel kann vorzugsweise einen mit einem dem Innengewinde gegengleichen Außengewinde ausgebildeten Fortsatz aufweisen, wodurch eine kraftschlüssige Verbindung mit der Grundplatte sichergestellt und eine geringe Bauhöhe des Fortsatzes erreicht werden kann.

Die Erfindung wird unter Bezugnahme auf die beigeschlossenen Zeichnungen, in welchen Ausführungsformen dargestellt sind, näher beschrieben. Dabei zeigt:
Fig. 1 die Seitenansicht einer Ausführungsform einer erfindungsgemäßen Kupplungsvorrichtung, wobei der Niederhalter in der ersten Position angeordnet ist;
Fig. 2 die Seitenansicht der Kupplungsvorrichtung gemäß Fig. 1, wobei der Niederhalter in der zweiten Position angeordnet ist;
Fig. 3 eine Draufsicht auf die Kupplungsvorrichtung gemäß Fig. 1;
Fig. 4 die Draufsicht auf eine andere Ausführungsform der erfindungsgemäßen Kupplungsvorrichtung;
Fig. 5 eine Vorderansicht auf eine bereichsweise aufgerissene Grundplatte, eine Kupplungskugel und eine Niederhalterschraube;
Fig. 6 eine vergrößerte und bereichsweise aufgerissene Darstellung der Niederhalterschraube gemäß Fig. 5, in Seitenansicht;
Fig. 7 eine Draufsicht auf eine Ausführungsform einer erfindungsgemäßen Kupplungsvorrichtung mit einem Fangmaul;
Fig. 8 eine Draufsicht auf eine Ausführungsform einer erfindungsgemäßen Kupplungsvorrichtung mit einem Fangmaul und einer Grundplatte mit Befestigungsöffnungen;
Fig. 9 eine Seitenansicht einer weiteren Ausführungsform einer erfindungsgemäßen Kupplungsvorrichtung mit einem Kolbenelement; und
Fig. 10 eine Draufsicht auf die Kupplungsvorrichtung gemäß Fig. 9.

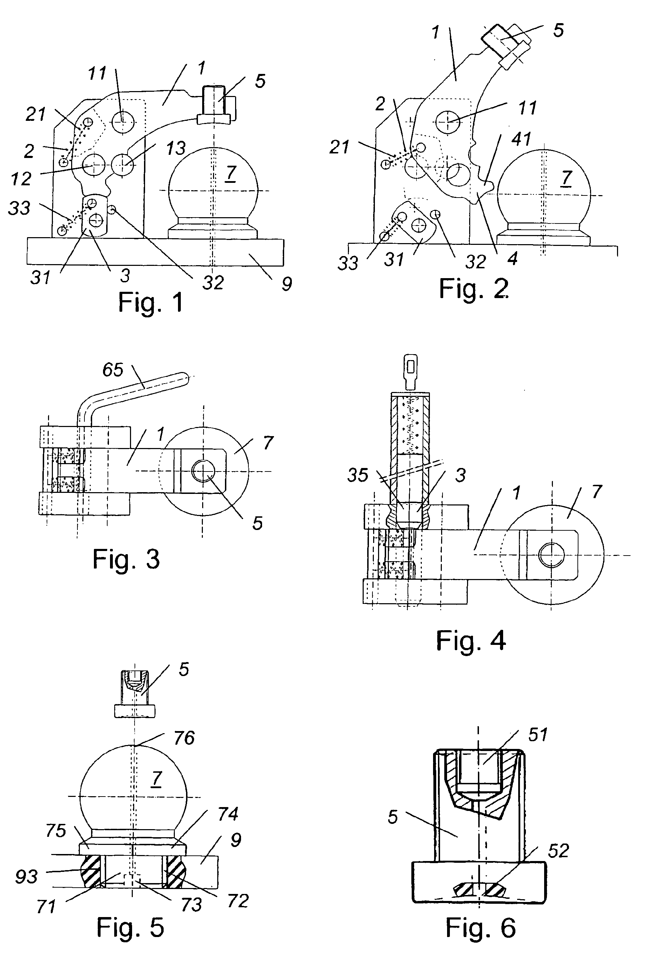

In den Fig. 1 bis 3 ist eine erste Ausführungsform einer erfindungsgemäßen Kupplungsvorrichtung mit einer Kupplungskugel 7 zur Aufnahme einer eine Kugelpfanne aufweisenden Zugöse und einem Niederhalter 1 dargestellt. Der Niederhalter 1 ist um eine Schwenkachse 11 von einer ersten Position in eine zweite Position verschwenkbar und mittels wenigstens eines Fixierelementes 3 in der ersten Position fixierbar. In Fig. 1 ist der Niederhalter 1 in der ersten Position und in Fig. 2 ist der Niederhalter in der zweiten Position angeordnet.

Die Kupplungsvorrichtung weist ein Stellelement 2, wobei vom Stellelement 2 auf den Niederhalter 1 in der ersten Position eine erste Haltekraft und in der zweiten Position eine zweite Haltekraft wirkt, und ein Auslöseelement 4 zum Verbringen des Niederhalters 1 von der zweiten Position in die erste Position auf.

Befindet sich der Niederhalter 1 in der zweiten Position, so wird die Kupplungskugel 7 freigegeben und eine Zugöse kann auf die Kupplungskugel 7 aufgesetzt werden. Durch Auslösen des Auslöseelementes 4 wird der Niederhalter 1 von der zweiten Position in die erste Position verbracht. Der Niederhalter 1 verhindert ein Abheben der Zugöse von der Kupplungskugel 7 und stellt sicher, daß die Zugöse mit der Kupplungsvorrichtung verbunden bleibt.

Auf den Niederhalter 1 wirkt in der zweiten Position vom Stellelement 2 die zweite Haltekraft, welche den Niederhalter 1 in der zweiten Position hält und in der ersten Position vom Stellelement 2 die erste Haltekraft, welche den Niederhalter 1 in der ersten Position hält. Dadurch wird sichergestellt, daß der Niederhalter 1 gegebenenfalls in der zweiten Position verbleibt, sodaß die Zugöse auf die Kupplungskugel 7 aufgesetzt werden kann und nicht vorzeitig unbeabsichtigt selbsttätig in die erste Position verschwenkt.

In der ersten Position wirkt die erste Haltekraft auf den Niederhalter 1, wodurch die Zugöse gegebenenfalls positioniert wird und das Fixieren des Fixierelementes 3 erleichtert wird.

Das Stellelement 2 kann als Zusatzmasse ausgebildet sein, welche mit dem Niederhalter 1 verbunden ist und sicherstellt, daß der gemeinsame Massenmittelpunkt des Niederhalters und des Stellelementes 2 bei der Verschwenkung des Niederhalters 1 von der zweiten Position in die erste Position über die senkrechte Lage über der Schwenkachse 11 geführt wird. Dabei können das Stellelement 2 und der Niederhalter 1 einstückig ausgebildet sein.

Ist das Stellelement 2 als Kraftelement ausgebildet, so kann die erste Haltekraft und/oder die zweite Haltekraft erhöht werden, wodurch die Zuverlässigkeit der erfindungsgemäßen Kupplungsvorrichtung verbessert wird. Dabei erscheint es insbesondere günstig zu sein, wenn das Stellelement 2 als Druckelement ausgebildet ist, da eine Druckkraft einfach und zuverlässig ausgebildet werden kann.

Das in den Fig. 1 bis 3 dargestellte Stellelement 2 ist als Federelement 21 ausgebildet. Das Federelement 21 stellt eine besonders einfache und zuverlässige Ausgestaltung des Stellelementes 2 dar und ist kostengünstig herstellbar. Ein weiterer Vorteil des Federelementes 21 ist, daß der Niederhalter jeweils kraftschlüssig und nicht formschlüssig in der ersten Position bzw. der zweiten Position gehalten wird und durch eine, die entsprechende Haltekraft übersteigende Kraft verschwenkt werden kann. Umfaßt das Auslöseelement 4 einen Vorsprung 41, so kann durch ein Verschieben und/oder Verschwenken od. dgl. des Vorsprungs 41 und damit des Auslöseelementes 4 der Niederhalter 1 von der zweiten Position in die erste Position verbracht werden, wobei das Verbringen nach einer vorgebbaren Bewegung des Vorsprungs 41 selbsttätig erfolgen kann.

Dabei kann, wie aus der Fig. 2 ersichtlich ist, der Vorsprung 41 im Bereich der Kupplungskugel 7 angeordnet sein, wenn sich der Niederhalter 1 in der zweiten Position befindet. Wird eine Zugöse auf den Kugelkopf 7 aufgesetzt, so wird der Vorsprung 41 verschoben und der Niederhalter 1 in die erste Position verbracht. Dabei ist es nicht erforderlich, daß der Vorsprung 41 die gesamte Wegstrecke verschoben wird, da nach einer vorgebbaren Wegstrecke das Federelement 21 den Niederhalter 1 in die erste Position verschwenkt. Umgekehrt kann beim Abheben einer Zugöse von dem Kugelkopf 7 der Niederhalter 1 so weit verschwenkt werden, daß er vom Federelement 21 in die zweite Position verschwenkt wird.

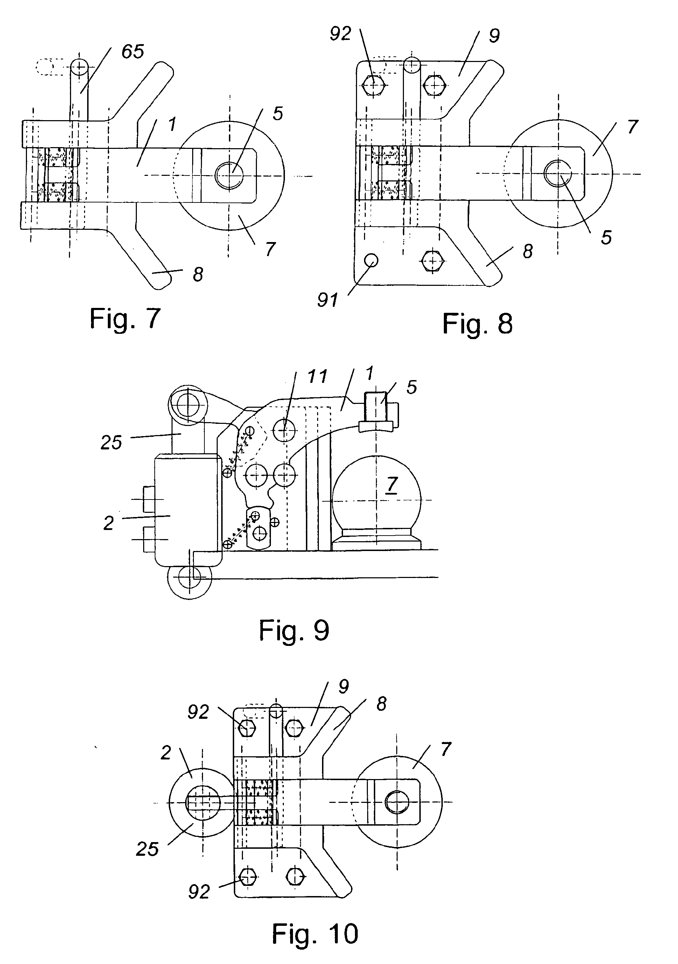

Bei der in den Fig. 9 und 10 gezeigten Ausführungsform einer erfindungsgemäßen Kupplungsvorrichtung ist das Stellelement 2 als druckbeaufschlagbares Kolbenelement 25 ausgebildet. Ist das Kolbenelement mit einer ein Druckmedium beinhaltenden Druckleitung od. dgl. verbunden, kann auf einfache Weise durch Veränderung des Druckes des Druckmediums die jeweilige Haltekraft verändert werden. Dabei kann insbesondere bei dem Auftreten negativer Stützlasten, bei denen die Zugöse gegen den Niederhalter 1 drückt, sichergestellt werden, daß die Zugöse auf der Kupplungskugel 7 aufliegt.

Bei anderen Ausführungsformen der erfindungsgemäßen Kupplungsvorrichtung kann das Stellelement auch als Federpaket, Tellerfeder, Gewindestange, Kniehebel od. dgl. ausgebildet sein.

Das Fixierelement 3 kann mit einer Fernbedienungseinheit verbunden sein. Die Fernbedienungseinheit kann einen Seilzug, eine hydraulische Leitung, eine pneumatische Leitung eine elektrische Leitung od. dgl. umfassen. Dadurch kann der Niederhalter 1 in der ersten Position fernbedient fixiert und/oder freigegeben werden, wodurch der Kupplungsvorgang und/oder der Abkupplungsvorgang vereinfacht werden kann, wobei insbesondere ein Fahrer eines Zugfahrzeuges vom Führerstand aus die Kupplungsvorrichtung betätigen kann.

Neben der Fernbedienungseinheit kann ein Handhebel 65 od. dgl. vorgesehen sein, wodurch die Möglichkeit einer manuellen Betätigung des Fixierelementes 3 sichergestellt werden kann, sodaß das Fixierelement 3 insbesondere auch bei einem Ausfall der Fernbedienungseinheit betätigbar ist.

Bei den in den Fig. 1 bis 3 und 9 und 10 dargestellten Ausführungsformen ist das wenigstens eine Fixierelement 3 als verschwenkbare Klappe 31 ausgebildet. Die Klappe 31 ist federbelastet, wobei eine Feder 33 die Klappe 31 gegen einen Anschlag 32 belastet. Ist der Niederhalter in der ersten Position, so wird durch die Feder 33 und den Anschlag 32 sichergestellt, daß die Klappe 31 in der den Niederhalter 1 fixierenden Stellung ist. Die Zuverlässigkeit der Klappe 31 kann weiter verbessert werden, wenn der Niederhalter 1 in der ersten Position bei Belastung die Klappe 31 in Richtung des Anschlags 32 belastet. Dies ist insbesondere der Fall, wenn der Massenmittelpunkt zwischen der Drehachse der Klappe 31 und dem Anschlag 32 angeordnet ist. Mittels der Klappe 31 können Belastungen vom Niederhalter 1 von der Kupplungsvorrichtung aufgenommen werden.

Ist der Niederhalter 1 in der zweiten Position und wird die Klappe 31 freigegeben, sodaß sie am Anschlag ansteht, so wird sie gemäß der in den Fig. 1 bis 3 gezeigten Ausführungsform selbsttätig verschwenkt, um das Verbringen des Niederhalters 1 zu ermöglichen, wobei aufgrund der Feder 33 eine nachfolgende selbsttätige Fixierung des Niederhalters erfolgt.

Bei der Ausführungsform einer erfindungsgemäßen Kupplungsvorrichtung gemäß Fig. 4 ist das Fixierelement 3 als Bolzen 35 ausgebildet. Für die Fixierung kann der Niederhalter 1 Öffnungen 12, Ausnehmungen 13 od. dgl. aufweisen. Auch der Bolzen 35 kann manuell und/oder mit einer Fernbedienungseinheit betätigbar sein.

Ist das Stellelement 2 als Kolbenelement 25 od. dgl. ausgebildet, erscheint es zweckmäßig, wenn das Fixierelement 3 ein Spiel mit dem Niederhalter 1 aufweist, um eine unmittelbare Kraftwirkung des Stellelementes 2 auf den Niederhalter 1 im fixierten Zustand zu ermöglichen. Dazu können insbesondere die Öffnungen 12 als Langlöcher ausgebildet sein. Dadurch kann die Zugöse vom Niederhalter 1 gegen die Kupplungskugel gepreßt werden, wobei die übertragene Kraft insbesondere im Bereich von 3 % bis 6 % des Anhängergewichts sein kann. Durch diese Fixierung der Zugöse gegenüber der Kupplungskugel können die Fahreigenschaften des Anhängers wesentlich verbessert werden. Insbesondere bei negativen Stützlasten und/oder geringen Stützlasten kann durch die vom Niederhalter 1 aufgebrachte Kraft eine Stabilisierung des Anhängers erreicht werden.

Bei der erfindungsgemäßen Kupplungsvorrichtung können auch zwei oder mehrere Fixierelemente 3 vorgesehen sein, welche insbesondere voneinander unabhängig betätigbar sind, um ein unbeabsichtigtes Öffnen der Kupplungsvorrichtung wirksam verhindern zu können. Dabei können gleiche und/oder verschiedene Fixierelemente 3 kombiniert werden oder auch eine zusätzliche Fixierung des Fixierelementes 3 vorgesehen sein. Es kann auch vorgesehen sein, daß die Länge des Stellelementes 2 fixierbar ist und dieses als Fixierelement 3 ausgebildet ist.

Mit dem Niederhalter 1 ist eine Niederhalterschraube 5 lösbar verbunden. In Fig. 5 ist die Kupplungskugel 7 und die Niederhalterschraube 5 dargestellt, wenn der Niederhalter 1 in der erste Position ist. Dabei kann zwischen der Niederhalterschraube 5 und der Kupplungskugel 7 die Zugöse angeordnet sein. Der Niederhalter 1 kann eine Bohrung mit einem Innengewinde und die Niederhalterschraube 5 einen zylindrischen Abschnitt mit einem gegengleichen Außengewinde aufweisen. Dadurch ist die Niederhalterschraube 5 gegenüber dem Niederhalter 1 höhenverstellbar, wodurch das Spiel zwischen der Zugöse und der Kupplungskugel 7 und zwischen der Zugöse und der Niederhalterschraube 5 einstellbar ist.

Dabei können Herstellungstoleranzen und/oder verschleißbedingte Spalte ausgeglichen werden. Im Betrieb tritt bei der Niederhalterschraube 5 aufgrund der Reibung mit der Zugöse ein Verschleiß auf, wobei es bei der Instandhaltung ausreicht, wenn nur die Niederhalterschraube 5 und nicht der gesamte Niederhalter 1 ausgetauscht wird. Der Verschleiß der Niederhalterschraube 5 und/oder der Zugöse wird verringert, durch die Niederhalterschraube 5 die eine Schmieröffnung 52 aufweist.

In Fig. 6 ist die Niederhalterschraube 5 vergrößert dargestellt. Eine geringe Bauhöhe wird erreicht, durch die Niederhalterschraube 5 die eine Innensechskant-Bohrung 51 od. dgl. aufweist. Dadurch ist für den Bereich zum Einstellen der Niederhalterschraube 5 keine zusätzliche Bauhöhe erforderlich.

Die in Fig. 7 dargestellt Ausführungsform der erfindungsgemäßen Kupplungsvorrichtung weist eine Fangvorrichtung 8 für die Zugöse auf, wodurch die Zugöse beim Einkuppeln in die richtige Lage über der Kupplungskugel 7 gebracht wird. Durch die Fangvorrichtung 8 kann die Bedienung der Kupplungsvorrichtung erleichtert werden.

Bei der in Fig. 8 gezeigten Ausführungsform der erfindungsgemäßen Kupplungsvorrichtung ist eine Grundplatte 9 mit Befestigungsöffnungen 91 für die Aufnahme von Schrauben 92 od. dgl. vorgesehen. Dadurch kann die Kupplungsvorrichtung einfach nachträglich an ein Zugfahrzeug od. dgl. angebracht und/oder einfach ausgetauscht werden.

Die Grundplatte 9 kann eine mit einem Innengewinde ausgebildete Aufnahmeöffnung 93, insbesondere für die Kupplungskugel 7, aufweisen. Die Kupplungskugel 7 kann einen mit einem dem Innengewinde gegengleichen Außengewinde 72 ausgebildeten Fortsatz 71 aufweisen. Dadurch kann die Kugel auf einfache Weise mit der Grundplatte 9 kraftschlüssig verbunden werden. Bei Bedarf kann anstelle der Kupplungskugel 7 auch ein Kupplungszapfen od. dgl. mit der Grundplatte 9 verbunden werden, wobei der Niederhalter 1 auch bei Verwendung eines Kupplungszapfens als Sicherungselement wirken kann.

Eine geringe Bauhöhe kann erreicht werden, wenn der Fortsatz 71 eine Innensechskant-Bohrung 73 od. dgl. und/oder an einem der Kupplungskugel 7 anliegenden Ende 74 eine Schraubfläche 75 aufweist. Die Lebensdauer der Kupplungskugel 7 und/oder der Zugöse kann erhöht werden, wenn die Kupplungskugel 7 wenigstens eine Schmieröffnung 76 aufweist.

## Patentansprüche

1. Kupplungsvorrichtung mit einer Kupplungskugel (7) zur Aufnahme einer eine Kugelpfanne aufweisenden Zugöse und einem Niederhalter (1), wobei eine mit dem Niederhalter (1) lösbar verbundene Niederhalterschraube (5) zum Eingriff mit der Zugöse vorgesehen ist und die Niederhalterschraube (5) eine Innensechskant-Bohrung (51) od. dgl. aufweist, **dadurch gekennzeichnet, daß** die Niederhalterschraube (5) wenigstens eine Schmieröffnung (52) aufweist.

2. Kupplungsvorrichtung nach Anspruch 1, **dadurch gekennzeichnet, daß** der Niederhalter (1) um eine Schwenkachse (11) von einer ersten Position in eine zweite Position verschwenkbar ist und mittels wenigstens eines Fixierelementes (3) in der ersten Position fixierbar ist.

3. Kupplungsvorrichtung nach einem der Ansprüche 1 bis 2, **dadurch gekennzeichnet, daß** ein Stellelement (2) vorgesehen ist, wobei vom Stellelement (2) auf den Niederhalter (1) in der ersten Position eine erste Haltekraft und in der zweiten Position eine zweite Haltekraft wirkt, und daß ein Auslöseelement (4) zum Verbringen des Niederhalters (1) von der zweiten Position in die erste Position vorgesehen ist.

4. Kupplungsvorrichtung nach Anspruch 2 oder 3, **dadurch gekennzeichnet, daß** das wenigstens eine Fixierelement (3) als verschwenkbare Klappe (31) od. dgl. ausgebildet ist.

5. Kupplungsvorrichtung nach Anspruch 4, **dadurch gekennzeichnet, daß** der Niederhalter (1) in der ersten Position bei Belastung die Klappe (31) in Richtung eines Anschlags (32) belastet.

6. Kupplungsvorrichtung nach einem der Ansprüche 1 bis 5, **dadurch gekennzeichnet, daß** eine Fangvorrichtung (8) für die Zugöse vorgesehen ist.

7. Kupplungsvorrichtung nach einem der Ansprüche 1 bis 6, **dadurch gekennzeichnet, daß** eine Grundplatte (9) eine mit einem Innengewinde ausgebildete Aufnahmeöffnung (93), insbesondere für die Kupplungskugel (7), aufweist.

## Claims

1. A coupling apparatus with a coupling ball (7) for receiving a drawbar eye comprising a ball socket and a retaining element (1), with a retaining screw (5) being provided for engagement with the drawbar eye, which screw is detachably connected with the retaining element (1), and the retaining screw (5) comprising hexagon socket bore (51) or the like, **characterized in that** the retaining screw (5) comprises at least one lubricating opening (52).

2. A coupling apparatus according to claim 1, **characterized in that** the retaining element (1) can be swiveled about a pivoting axis (11) from a first position to a second position and can be fixed by means of at least one fixing element (3) in the first position.

3. A coupling apparatus according to one of the claims 1 to 2, **characterized in that** an actuating element (2) is provided, with a first holding force acting by the actuating element (2) on the retaining element (1) in the first position and a second holding force acting in the second position, and that a release element (4) is provided for displacing the retaining element (1) from the second position to the first position.

4. A coupling apparatus according to claim 2 or 3, **characterized in that** the fixing element (3), of which there is at least one, is arranged as a pivoting flap (31) or the like.

5. A coupling apparatus according to claim 4, **characterized in that** in the first position the retaining element (1) loads the flap (31) under load in the direction of a stop element (32).

6. A coupling apparatus according to one of the claims 1 to 5, **characterized in that** a catching apparatus (8) is provided for the drawbar eye.

7. A coupling apparatus according to one of the claims 1 to 6, **characterized in that** a base plate (9) comprises a receiving opening (93) provided with an inside thread, especially for the coupling ball (7).

## Revendications

1. Attache de remorque avec une rotule d'attelage (7) destinée à recevoir un anneau de traction présentant un logement de rotule et avec un abaisseur (1), dans laquelle une vis d'abaissement (5) reliée de manière amovible à l'abaisseur (1) est prévue pour se mettre en prise avec l'anneau de traction, et la vis d'abaissement (5) possède un réceptacle à six pans creux (51) ou similaire, **caractérisée en ce que** la vis d'abaissement (5) possède au moins un orifice de lubrification (52).

2. Attache de remorque selon la revendication 1, **caractérisée en ce que** l'abaisseur (1) peut pivoter autour d'un axe de pivotement (11) entre une première position et une seconde position et peut être fixé dans la première position au moyen d'au moins un élément de fixation (3).

3. Attache de remorque selon l'une quelconque des revendications 1 à 2, **caractérisée en ce qu'**il est prévu un élément d'ajustement (2), lequel élément d'ajustement (2) exerce une première force de maintien sur l'abaisseur (1) dans la première position et une seconde force de maintien dans la seconde position, et **en ce qu'**il est prévu un élément déclencheur (4) destiné à amener l'abaisseur (1) de la seconde position à la première position.

4. Attache de remorque selon la revendication 2 ou 3, **caractérisée en ce que** l'élément de fixation (3) au nombre d'un au moins est conformé comme un volet pivotant (31) ou similaire.

5. Attache de remorque selon la revendication 4, **caractérisée en ce que** l'abaisseur (1) contraint le volet (31) en direction d'une butée (32) dans la première position.

6. Attache de remorque selon l'une quelconque des revendications 1 à 5, **caractérisée en ce qu'**il est prévu un dispositif d'arrêt (8) pour l'anneau de traction.

7. Attache de remorque selon l'une quelconque des revendications 1 à 6, **caractérisée en ce qu'**une plaque de base (9) présente une ouverture de réception (93) pourvue d'un filetage intérieur, en particulier pour la rotule d'attelage (7).
